# EUROPEAN PATENT APPLICATION

(11) **EP 4 738 945 A1**
(43) Date of publication of application: **06.05.2026**
(21) Application number: 24843511.7
(22) Date of filing: 17.07.2024
(51) Int. Cl.: H04W 52/28, H04W 52/36, H04W 52/52, H04B 1/3827

(54) **WEARABLE ELECTRONIC DEVICE AND METHOD FOR CONTROLLING TRANSMISSION POWER IN WEARABLE ELECTRONIC DEVICE**

(30) Priority: 20.07.2023 KR 20230094494
(71) Applicant: Samsung Electronics Co., Ltd., Suwon-si, Gyeonggi-do 16677 (KR)
(72) Inventor: DO, Wonik, Suwon-si, Gyeonggi-do 16677 (KR); LEE, Byoungyoun, Suwon-si, Gyeonggi-do 16677 (KR); CHOI, Yongjun, Suwon-si, Gyeonggi-do 16677 (KR)
(74) Representative: HGF
(86) International application number: PCT/KR2024/010309
(87) International publication number: WO 2025/018796

(57) **Abstract**

A wearable electronic device according to an embodiment includes: a sound output module; communication circuitry; memory; and at least one processor. The at least one processor may be configured to: identify whether a music playback function is activated on the basis of occurrence of an event for transmitting a communication signal; control the communication circuitry to transmit the communication signal by using first transmission power control information on the basis of deactivation of the music playback function; and control the communication circuitry to transmit the communication signal by using second transmission power control information on the basis of activation of the music playback function. Other embodiments may be included.

## Description

### [Technical Field]

Various embodiments of the disclosure relate to a method for controlling transmission power in a wearable electronic device.

### [Background Art]

An electronic device may refer to a device that performs specific functions based on a built-in program, such as a home appliance, an electronic organizer, a portable multimedia player, a mobile communication terminal, a tablet PC, a video/audio device, a desktop/laptop computer, or a vehicle navigation device. For example, these electronic devices may output stored information as sound or video. As electronic devices have become more integrated and ultrahigh-speed, large-capacity wireless communication has become commonplace, a single electronic device, such as a mobile communication terminal, may now be equipped with various functions. For example, not only communication functions but also entertainment functions like gaming, multimedia functions like music/video playback, communication and security functions for mobile banking, and various other functions like schedule management or an e-wallet are all integrated into a single electronic device. These electronic devices are miniaturized so that users may conveniently carry and wear them. Along with the development of electronics and communication technology, these electronic devices are miniaturized and lightened to the point where they may be used while worn on the body without great discomfort, and thus may be provided in the form of a wearable electronic device.

### [Detailed Description of the Invention]

### [Technical Solution]

A wearable electronic device may support wireless communication over a network and transmit a communication signal based on a pre-specified transmission power value for each frequency band. As the transmission power values for each frequency band increases during transmission of a communication signal, when the wearable electronic device may have a higher likelihood of heat generation. When the wearable electronic device receives music data via the network and plays music, there is also a higher possibility of heat generation due to a high data throughput. When the internal temperature of the wearable electronic device is equal to or higher than a specific level due to heat generation, it may be configured to block the transmission of communication signals (or operate in a cool-down mode). When the wearable electronic device receives music data over the network and plays music, while performing communication signal transmission with a maximum transmission power value for each frequency band in a weak electric field, heat generation becomes severe. This may cause the communication signal transmission blocking operation to occur frequently, which may cause user inconvenience.

According to an embodiment, a wearable electronic device and a method for controlling transmission power in the wearable electronic device may be provided, which may reduce a likelihood of heat generation by reducing a transmission power value for each frequency band during reception of music data through a network and music playback.

A wearable electronic device according to an embodiment may include a sound output module, communication circuitry, memory, and at least one processor. The at least one processor according to an embodiment may identify whether a music playback function is activated, based on occurrence of an event for transmitting a communication signal. The at least one processor according to an embodiment may control the communication circuitry to transmit the communication signal using first transmission power control information, based on deactivation of the music playback function. The at least one processor according to an embodiment may control the communication circuitry to transmit the communication signal using second transmission power control information, based on activation of the music playback function.

According to an embodiment, a method for controlling transmission power in a wearable electronic device may include identifying whether a music playback function is activated, based on occurrence of an event for transmitting a communication signal. The method according to an embodiment may include transmitting the communication signal using first transmission power control information through communication circuitry, based on deactivation of the music playback function. The method according to an embodiment may include transmitting the communication signal using second transmission power control information through the communication circuitry, based on activation of the music playback function.

According to an embodiment of the disclosure, in a non-transitory storage medium storing instructions, the instructions may be configured to, when executed by an electronic device, cause the electronic device to perform at least one operation. The at least one operation may include identifying whether a music playback function is activated, based on occurrence of an event for transmitting a communication signal, transmitting the communication signal using first transmission power control information through communication circuitry, based on deactivation of the music playback function, and transmitting the communication signal using second transmission power control information through the communication circuitry, based on activation of the music playback function.

According to an embodiment, a likelihood of heat generation may be reduced by reducing a transmission power value for each frequency band during reception of music data through a network and music playback.

### [Brief Description of Drawings]

FIG. 1 is a block diagram illustrating an electronic device in a network environment according to an embodiment.
FIG. 2A is a front perspective view illustrating a wearable electronic device according to an embodiment.
FIG. 2B is a rear perspective view illustrating the wearable electronic device of FIG. 2A according to an embodiment.
FIG. 3 is an exploded perspective view illustrating a wearable electronic device according to an embodiment.
FIG. 4 is a block diagram illustrating a wearable electronic device for supporting network communication according to an embodiment.
FIG. 5 is a flowchart illustrating a transmission power control operation in a wearable electronic device according to an embodiment.
FIG. 6 is a procedural diagram illustrating an operation through communication between an application processor and a communication processor according to an embodiment.
FIG. 7 is a flowchart illustrating a transmission power control operation considering an SAR-related power back-off condition in a wearable electronic device according to an embodiment.
FIG. 8A is a graph illustrating peak currents, when second transmission power control information based on activation of a music playback function is not applied in a wearable electronic device according to an embodiment.
FIG. 8B is a graph illustrating peak currents, when second transmission power control information based on activation of a music playback function is applied in a wearable electronic device according to an embodiment.

### [Mode for Carrying out the Invention]

An electronic device according to various embodiments will be described below with reference to the attached drawings. The term user as used in various embodiments may refer to a person who uses an electronic device or a device (e.g., an artificial intelligence electronic device) that uses an electronic device.

The terms used herein are only for the purpose of describing a specific embodiment and are not intended to limit the scope of other embodiments. A singular expression may include a plural expression, unless the context clearly dictates otherwise. All terms used herein, including technical and scientific terms, may have the same meaning as that commonly understood by those skilled in the art. Commonly used dictionary terms may be interpreted as having meanings identical or similar to their meanings in the context of the relevant technology, and are not to be interpreted in an idealistic or excessively formal sense, unless explicitly defined otherwise in the disclosure. In some cases, even a term defined in the disclosure may not be interpreted to exclude the embodiments of the disclosure.

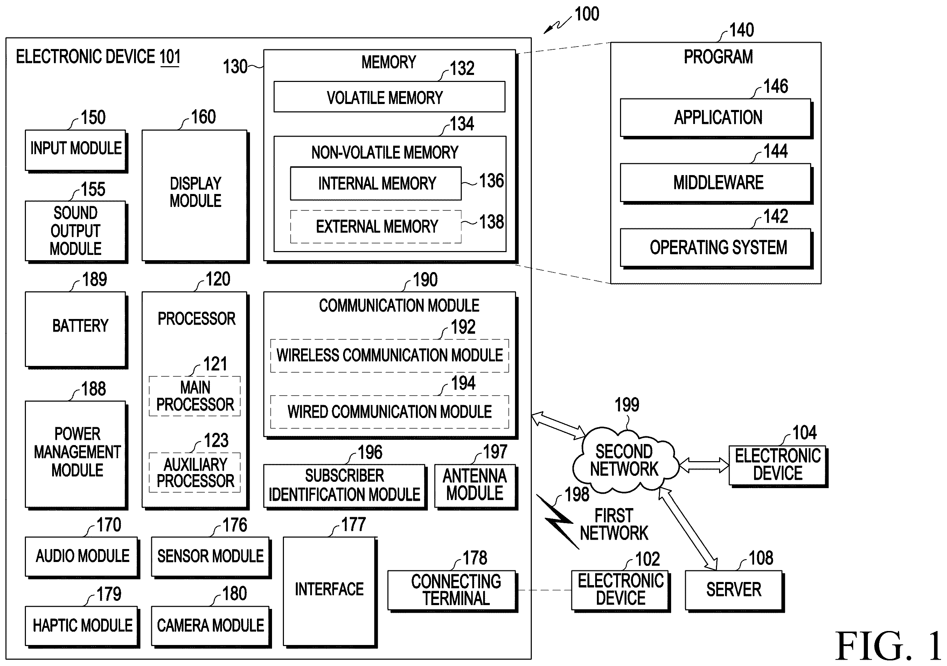

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a front surface (e.g., the bottom surface) of the printed circuit board, or adjacent to the front surface and capable of supporting a designated high-frequency band (e.g., the mmWave band), and a plurality of antennas (e.g., array antennas) disposed on a rear surface (e.g., the top or a side surface) of the printed circuit board, or adjacent to the rear surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

An electronic device (e.g., the electronic device 101 in FIG. 1) according to an embodiment may have the structure of a wearable electronic device. According to an embodiment, the electronic device 101, which is a watch-type wearable electronic device, is wearable on a user. For example, the electronic device 101 may be a smart watch wearable on the user's wrist.

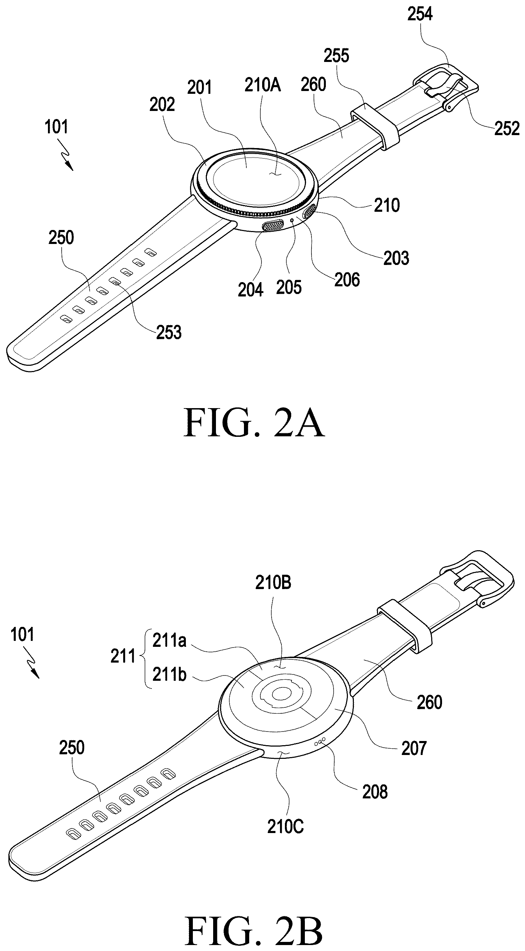

FIG. 2A is a front perspective view illustrating a wearable electronic device (e.g., the electronic device 101 in FIG. 1) according to an embodiment. FIG. 2B is a rear perspective view illustrating the electronic device 101 of FIG. 2A.

Referring to FIGS. 2A and 2B, the electronic device 101 according to an embodiment may include a housing 210 which includes a front surface 210A, a rear surface 210B, and a side surface 210C surrounding a space between the front surface 210A and the rear surface 210B, and fastening members 250 and 260 connected to at least a portion of the housing 210 and configured to be detachably fasten the electronic device 101 to a user's body part (e.g., wrist or ankle). In another embodiment (not shown), the housing may refer to a structure that forms portions of the front surface 210A, the rear surface 210B, and the side surface 210C of FIG. 2A. According to an embodiment, at least a portion of the front surface 210A may be formed by a front plate 201 (e.g., a glass plate or polymer plate including various coating layers) which is at least partially substantially transparent. The rear surface 210B may be formed by a substantially opaque rear cover 207. The rear cover 207 may be formed of, for example, coated or tinted glass, ceramic, a polymer, a metal (e.g., aluminum, stainless steel (STS), or magnesium), or a combination of at least two of these materials. The side surface 210C may be formed by a side bezel structure (or side member) 206 coupled to the front plate 201 and the rear cover 207 and including a metal and/or a polymer. In some embodiments, the rear cover 207 and the side bezel structure 206 may be integrally formed and include the same material (e.g., a metal material such as aluminum). The fastening members 250 and 260 may be formed of any of various materials in any of various shapes. A woven fabric, leather, rubber, urethane, a metal, ceramic, or a combination of at least two of these materials may be used to form an integrated type and a plurality of unit links to be movable with each other.

According to an embodiment, the electronic device 101 may include at least some or all of the components illustrated in FIG. 1 including a display 220 (e.g., the display 160 in FIG. 1). In some embodiments, the electronic device 101 may not be provided with at least one of the components illustrated in FIG. 1 or additionally include other components.

According to an embodiment, the display 220 may be exposed, for example, through a substantial portion of the front plate 201. The shape of the display 220 may correspond to that of the front plate 201, and may be any of various types such as a circle, an oval, or a polygon. The display 220 may be incorporated with or disposed adjacent to a touch sensing circuit, a pressure sensor that measures the intensity (pressure) of a touch, and/or a fingerprint sensor.

A microphone for obtaining an external sound may be disposed in a microphone hole 205 (e.g., the sound output module 155 in FIG. 1) according to an embodiment, and in some embodiments, a plurality of microphones may be disposed within the microphone hole 205 to detect the direction of a sound. A speaker hole 208 (e.g., the sound output module 155 in FIG. 1) may be used as an external speaker and a receiver for calls. In some embodiments, the speaker hole 208 and the microphone hole 205 may be implemented as a single hole, or a speaker (e.g., a piezo speaker) may be included without the speaker hole 208.

A sensor module 211 (e.g., the sensor module 176 in FIG. 1) according to an embodiment may generate an electrical signal or data value corresponding to an internal operation state of the electronic device 101 or an external environmental state. The sensor module 211 may include, for example, a biometric sensor module 211 (e.g., a HRM sensor) disposed on the rear surface 210B of the housing 210. According to an embodiment, the sensor module 211 may include a plurality of biometric sensor modules 211a and 211b. The electronic device 101 may further include a sensor module (not shown), for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor. According to an embodiment, the sensor module 211 may include a pressure sensor to measure the intensity of pressure applied to the electronic device 101 based on the degree of contact between the user's body part and the electronic device 101, when the user wears it. According to an embodiment, a processor (e.g., the processor 120 in FIG. 1) may determine a bio-signal (e.g., an electrocardiogram or heart rate signal) based on signals obtained from the sensor module 211.

Key input devices 202, 203, and 204 according to an embodiment may include a wheel key 202 disposed on the front surface 210A of the housing 210 and rotatable in at least one direction, and/or side key buttons 203 and 204 disposed on the side surface 210C of the housing 210. The wheel key may have a shape corresponding to that of the front plate 202. In another embodiment, the electronic device 101 may not include some or any of the above-mentioned key input devices 202, 203, and 204, and the key input devices 202, 203, and 204 which are not included may be implemented in another form such as a soft key on the display 220. A connector hole 209 (e.g., the connecting terminal 178 in FIG. 1) according to an embodiment may accommodate a connector (e.g., a USB connector) for transmitting and receiving power and/or data to and from an external electronic device (e.g., the electronic device 102 in FIG. 1), and another connector hole (not shown) for accommodating a connector for transmitting and receiving a sound signal to and from an external electronic device. The electronic device 101 may further include, for example, a connector cover (not shown) that covers at least a portion of the connector hole 209 and blocks the introduction of a foreign material into the connector hole.

The fastening members 250 and 260 according to an embodiment may be detachably fastened to at least a partial area of the housing 210 using a hinge structure. The fastening members 250 and 260 may include one or more of a fixing member 252, a fixing member fastening hole 253, a band guide member 254, and a band fixing loop 255.

The fixing member 252 according to an embodiment may be configured to fix the housing 210 and the fastening members 250 and 260 to the user's body part (e.g., wrist or ankle). The fixing member fastening hole 253 may fix the housing 210 and the fastening members 250 and 260 to the user's body part in correspondence with the fixing member 252. The band guide member 254 may be configured to limit a movement range of the fixing member 252, when the fixing member 252 is fastened in the fixing member fastening hole 253, so that the fastening members 250 and 260 are fastened to the user's body part in close contact. The band fixing loop 255 may limit movement ranges of the fastening members 250 and 260, with the fixing member 252 fastened in the fixing member coupling hole 253.

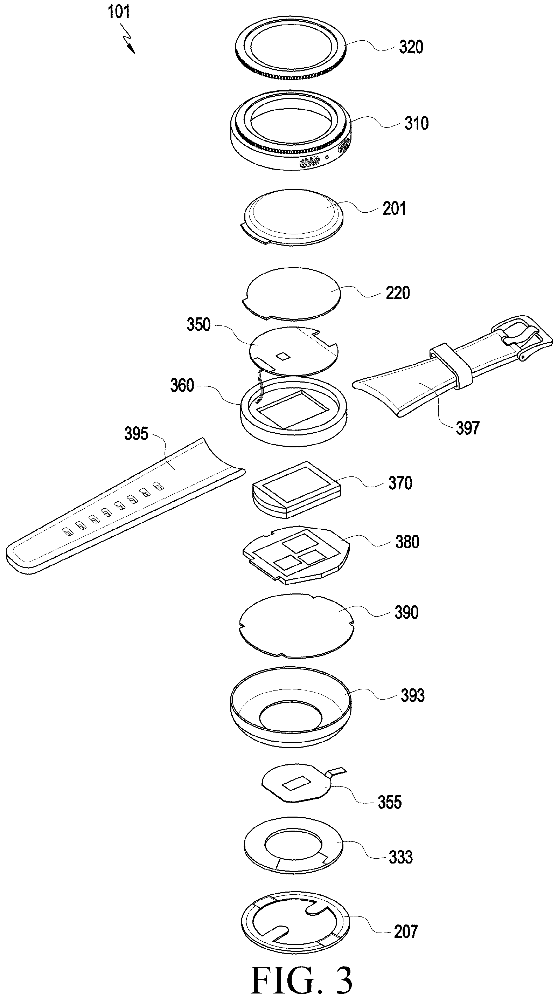

FIG. 3 is an exploded perspective view illustrating an electronic device (e.g., the electronic device in FIG. 1) according to an embodiment.

Referring to FIG. 3, the electronic device 101 may include a side bezel structure 310, a wheel key 320, the front plate 101, the display 120, a first antenna 350, a second antenna 355, a support member 360 (e.g., a bracket), a battery 370, a first printed circuit board 380, a sealing member 390, a rear plate 393, and fastening members 395 and 397. At least one of the components of the electronic device 101 may be the same as or similar to at least one of the components of the electronic device 101 in FIG. 1A or FIG. 2B, and a redundant description will be avoided herein. The support member 360 may be disposed inside the electronic device 101 and connected to the side bezel structure 310, or may be integrally formed with the side bezel structure 310. The support member 360 may be formed of, for example, a metal material and/or a non-metal (e.g., polymer) material. The support member 360 may have one surface coupled to the display 120 and the other surface coupled to the first printed circuit board 380. A processor (e.g., the processor 120 in FIG. 1), memory (e.g., the memory 130 in FIG. 1), and/or an interface (e.g., the interface 177 in FIG. 1) may be mounted on the first printed circuit board 380.

At least a portion of the battery 370 according to an embodiment may be disposed substantially on the same plane as, for example, the first printed circuit board 380. The battery 370 may be integrally disposed inside the electronic device 101 or disposed detachably from the electronic device 101.

The first antenna 350 according to an embodiment may be disposed between the display 220 and the support member 360. The first antenna 350 may, for example, transmit or receive wireless RF signals to or from the outside (e.g., an external electronic device). According to an embodiment, the second antenna 350 may include an antenna including a radiator made of a conductor or a conductive pattern. According to an embodiment, the second antenna 350 may include a plurality of antennas (e.g., an array antenna), and at least one antenna suitable for a communication scheme used in a communication network may be selected from among the plurality of antennas by, for example, a communication circuit 493. In another embodiment, an antenna structure may be formed by a portion or a combination of the side bezel structure 310 and/or the support member 360.

The second antenna 355 according to an embodiment may be disposed between the circuit board 380 and the rear plate 393. The second antenna 355 may include, for example, a near field communication (NFC) antenna, a wireless charging antenna, and/or a magnetic secure transmission (MST) antenna. The second antenna 355 may, for example, perform short-range communication with an external device, wirelessly transmit and receive power required for charging, and transmit a short-range communication signal or a magnetic-based signal including payment data.

The sealing member 390 according to an embodiment may be located between the side bezel structure 310 and the rear plate 393. The sealing member 390 may be configured to block the introduction of moisture and a foreign material from the outside into a space surrounded by the side bezel structure 310 and the rear plate 393.

According to an embodiment, the second printed circuit board 333 (e.g., a printed circuit board (PCB), flexible printed circuit board (FPCB), or rigid-flexible PCB (RFPCB)) may be placed between the rear plate 393 and the rear cover 207. The second printed circuit board 333 may be electrically connected to the first printed circuit board 380 through a hole formed in the rear plate 393. A coil for wireless charging (not shown) may be disposed to surround the outer circumference of the second printed circuit board 333.

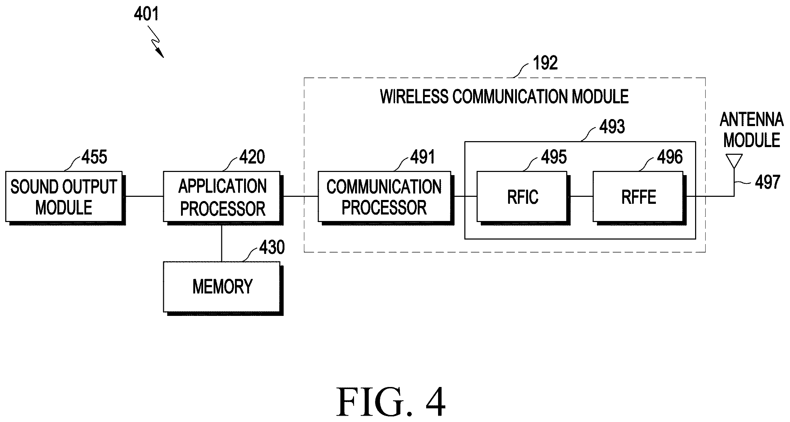

FIG. 4 is a block diagram illustrating a wearable electronic device for supporting network communication according to an embodiment.

Referring to FIG. 4, a wearable electronic device 401 (e.g., the electronic device 101 in FIG. 1) according to an embodiment may include at least one processor (e.g., an application processor 420 and a communication processor 491), memory 430, a sound output module 455, the communication circuit 493, and an antenna module 497.

The at least one processor 420 and 491 according to an embodiment may be implemented as a single integrated chip or separate chips. The at least one processor 420 and 491 according to an embodiment may identify whether a music playback function is activated, based on occurrence of a communication signal transmission event. The at least one processor 420 and 491 according to an embodiment may control the communication circuit 493 to transmit a communication signal using first transmission power control information, based on deactivation of the music playback function. The first transmission power control information according to an embodiment may include information that causes the communication circuit 493 to use a specified transmission power level or maximum transmission power level (MTPL) (e.g., 23dBm in the 3GPP communication standards) for each frequency band. For example, the first transmission power control information may include transmission power control information (e.g., a normal transmission power control table (or a default transmission power control table)) for a normal state. The at least one processor 420 and 491 according to an embodiment may control the communication circuit 493 to transmit the communication signal using second transmission power control information, based on activation of the music playback function. The second transmission power control information according to an embodiment may include information that causes the specified transmission power level for each frequency band to be lowered by a specified value (e.g., a few dB or about -1dB). For example, the second transmission power control information may include a preset transmission power control table corresponding to music playback activation. The at least one processor 420 and 491 according to an embodiment may further identify whether a specific absorption rate (SAR)-related power (e.g., transmission power) back-off condition is satisfied, based on the occurrence of the communication signal transmission event. An SAR according to an embodiment is a numerical value indicating how much electromagnetic wave radiated from the wearable electronic device 401 is absorbed by the human body. The SAR uses units of KW/g or mW/g, which may mean the amount of power (KW, W, or mW) absorbed per 1g of the human body. According to an embodiment, the SAR-related power back-off condition may be a condition that an expected SAR from transmission power exceeds a threshold. For example, the SAR-related power back-off condition may include a condition that a microphone or a speaker is in use during a call connection, and a country code related to communication corresponding to the call connection is a specified mobile country code (MCC). When the SAR-related power back-off condition is not satisfied, the at least one processor 420 and 491 according to an embodiment may control the communication circuit 493 to transmit the communication signal using the first transmission power control information based on the deactivation of the music playback function, or using the second transmission power control information based on the activation of the music playback function. When the SAR-related power back-off condition is satisfied, the at least one processor 420 and 491 according to an embodiment may control the communication circuit 493 to transmit the communication signal using third transmission power control information, regardless of whether the music playback function is activated. The third power control information according to an embodiment may include information for adjusting the specified transmission power level for each frequency band to a value corresponding to the SAR-related power back-off condition.

The at least one processor 420 and 491 according to an embodiment may include the application processor 420 and the communication processor 491. The application processor 420 and the communication processor 491 according to an embodiment may communicate using a communication scheme between processors (e.g., interprocessor communication (IPC)). The application processor 420 and the communication processor 491 according to an embodiment may transmit and receive data through an HS-UART interface or a PCIe interface, but the type of the interface may not be limited. Alternatively, the application processor 420 and the communication processor 491 may exchange control information and packet data information using shared memory.

The application processor 420 according to an embodiment may identify whether the music playback function is activated, based on occurrence of an interrupt related to audio processing (or an audio data block in the memory 430). The application processor 420 according to an embodiment may identify whether the music playback function is activated, based on the occurrence of an interrupt related to audio processing (or the audio data block in the memory 430) in a state where the SAR-related power back-off condition is not satisfied. When the music playback function is deactivated, the application processor 420 according to an embodiment may transmit a first value (e.g., code value A(0x200010)) corresponding to the deactivation of the music playback function to the communication processor 491. When the music playback function is activated, the application processor 420 according to an embodiment may transmit a second value (e.g., code value B(0x100000)) corresponding to the activation of the music playback function to the communication processor 491.

The communication processor 491 according to an embodiment may control the communication circuit 493 to transmit a communication signal using the first transmission power control information, based on the reception of the first value from the application processor 420. The communication processor 491 according to an embodiment may control the communication circuit 493 to transmit a communication signal using the second transmission power control information, based on the reception of the second value from the application processor 420. The communication processor 491 and the communication circuit 493 according to an embodiment may also be referred to as a wireless communication module 492 (e.g., the wireless communication module 192 in FIG. 1).

The communication processor 491 according to an embodiment may support establishment of a communication channel in a band used for wireless communication with a network (e.g., the second network 199), and network (or cellular network or legacy network) communication through the established communication channel. According to an embodiment, the cellular network may include a 2G, 3G, 4G, or long term evolution (LTE) network.

The communication circuit 493 according to an embodiment may process a wireless communication signal received from the outside via the antenna module 497 or transmit a wireless communication signal to be transmitted to the outside via the antenna module 497, under the control of the communication processor 491. The communication circuit 493 according to an embodiment may include a radio frequency integrated chip (RFIC) 495 and a radio frequency front end (RFFE) 496.

The RFIC 495 according to an embodiment may convert a baseband signal generated by the communication processor 491 into a radio frequency (RF) signal of about 700MHz to about 3GHz used in a network (e.g., a legacy network) during transmission. During reception, the RFIC 495 according to an embodiment may convert an RF signal obtained from a network through the antenna module 497 and preprocessed through the RFFE 496 into a baseband signal and provide the baseband signal to the communication processor 491.

The RFFE 495 according to an embodiment may include a power amplifier, a switch, and a filter, and amplify the power of a transmission signal so that it is output through the antenna module 497. The RFIC 495 according to an embodiment may control the operation of the power amplifier of the RFFE 495 for amplifying a transmission RF signal, based on the first transmission power control information, the second transmission power control information, or the third transmission power control information from the communication processor 491. The RFFE 495 according to an embodiment may preprocess a received signal and provide it to the RFIC 495 during power reception.

The antenna module 497 according to an embodiment (e.g., the antenna module 197 in FIG. 1 or the second antenna 355 in FIG. 3) may transmit or receive a signal or power to or from the outside (e.g., an external electronic device). According to an embodiment, the antenna module 497 may include an antenna with a radiator made of a conductor or a conductive pattern. According to an embodiment, the antenna module 497 may include a plurality of antennas, and at least one antenna suitable for a communication scheme used in a network may be selected by the switch of the RFFE 496. A signal or power may be transmitted or received between the communication circuit 493 and the external electronic device through the at least one selected antenna.

The sound output module 455 (e.g., the sound output module 155 in FIG. 1) according to an embodiment may output a sound signal corresponding to the activation of the music playback function to the outside of the wearable electronic device 401 under the control of the application processor 420. The sound output module 455 may, for example, include a speaker or a receiver.

The memory 430 (e.g., the memory 130 in FIG. 1) according to an embodiment may store various data used by at least one component (e.g., the application processor 420 or the communication processor module 491) of the electronic device 401. The memory 430 according to an embodiment may store the first transmission power control information, the second transmission power control information, and the third transmission power control information. The memory 430 according to an embodiment may store instructions configured to cause the at least one processor 420 and 391 to perform a transmission power control operation.

A wearable electronic device (e.g., the electronic device 101 in FIG. 1 or the wearable electronic device 401 in FIG. 4) according to an embodiment may include a sound output module (e.g., the sound output module 155 in FIG. 1 or the sound output module 455 in FIG. 4), communication circuitry (e.g., the communication circuit 493 in FIG. 4), memory (e.g., the memory 130 in FIG. 1 or the memory 430 in FIG. 4), and at least one processor (the application processor 420 and the communication processor 491 in FIG. 4). The at least one processor according to an embodiment may identify whether a music playback function is activated, based on occurrence of an event for transmitting a communication signal. The at least one processor according to an embodiment may control the communication circuitry to transmit the communication signal using first transmission power control information, based on deactivation of the music playback function. The at least one processor according to an embodiment may control the communication circuitry to transmit the communication signal using the second transmission power control information, based on activation of the music playback function.

The first transmission power control information according to an embodiment may include information configured to cause the communication circuitry to use a specified transmission power level for each frequency band. The second transmission power control information according to an embodiment may include information configured to cause the specified transmission power level for each frequency band to be lowered by a specified value corresponding to the activation of the music playback function.

The specified value according to an embodiment may be -1dB.

The specified value according to an embodiment may be set to a different value according to a music playback time based on the activation of the music playback function.

The at least one processor according to an embodiment may further identify whether an SAR-related power back-off condition is satisfied, based on the occurrence of the event for transmitting the communication signal.

When the SAR-related power back-off condition is not satisfied, the at least one processor according to an embodiment may control the communication circuitry to transmit the communication signal using the first transmission power control information or the second transmission power control information according to whether the music playback function is activated.

When the SAR-related power back-off condition is satisfied, the at least one processor according to an embodiment may be configured to transmit the communication signal based on third transmission power information.

The SAR-related power back-off condition according to an embodiment may include a condition that a microphone or a speaker is in use during a call connection, and a country code related to communication corresponding to the call connection is a specified MCC.

The at least one processor according to an embodiment may include a processor and a communication processor. The application processor according to an embodiment may be configured to identify whether the music playback function is activated, based on occurrence of an interrupt related to audio processing, transmit a first value corresponding to the deactivation of the music playback function to the communication processor, in case that the music playback function is deactivated, and transmit a second value corresponding to the activation of the music playback function to the communication processor, in case that the music playback function is activated.

The communication processor according to an embodiment may be configured to control the communication circuitry to transmit the communication signal based on the first transmission power information, based on the reception of the first value, and to control the communication circuitry to transmit the communication signal based on the second transmission power information, based on the reception of the second value.

The application processor and the communication processor according to an embodiment may be configured to communicate using an IPC protocol.

The application processor according to an embodiment may be configured to identify the activation of the music playback function, based on a media session created by execution of a music data streaming application.

The communication circuitry according to an embodiment may include an RFIC and an RFFE.

The RFIC according to an embodiment may be configured to convert a transmission baseband signal to a transmission RF signal and output the transmission RF signal. The RFFE according to an embodiment be configured to amplify power of the transmission RF signal and output the amplified transmission RF signal through an antenna module. The communication processor according to an embodiment may be configured to control an operation of a power amplifier of the RFFE for amplifying the transmission RF signal generated by the RFIC, based on the first transmission power control information, the second transmission power control information, or the third transmission power control information.

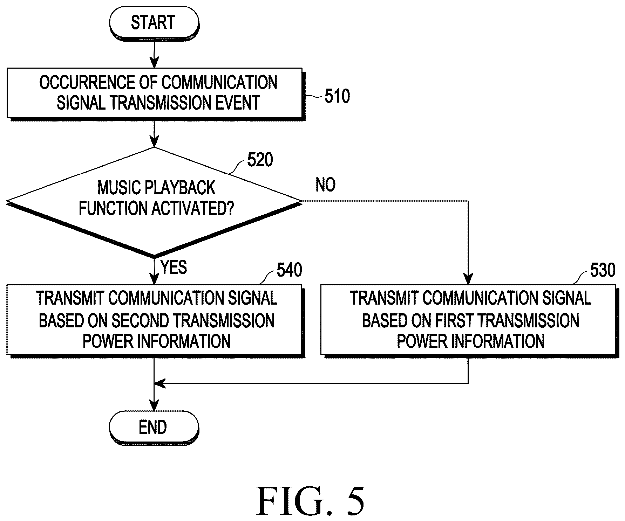

FIG. 5 is a flowchart illustrating a transmission power control operation in a wearable electronic device according to an embodiment.

Referring to FIG. 5, at least one processor (e.g., the processor 120 and the wireless communication module 192 in FIG. 1 or the application processor 420 and the communication processor 491 in FIG. 4) of an electronic device (e.g., the electronic device 101 in FIG. 1, or the electronic device 401 in FIG. 4) according to an embodiment may perform at least one of operations 510 to 540.

In operation 510, the at least one processor 420 and 491 according to an embodiment may identify occurrence of a communication signal transmission event. The at least one processor 420 and 491 according to an embodiment may identify whether there is a baseband signal to be transmitted.

In operation 520, the at least one processor 420 and 491 according to an embodiment may identify whether the music playback function is activated, based on the occurrence of the communication signal transmission event. The at least one processor 420 and 491 according to an embodiment may identify whether the music playback function is activated, based on an interrupt related to audio processing (or the audio data block in the memory 430). The at least one processor 420 and 491 according to an embodiment may identify whether the music playback function is activated, based on a media session created by execution of a music playback application or a music data streaming application. The application processor 420 according to an embodiment may identify whether the music playback function is activated, based on the interrupt related to audio processing (or the audio data block in the memory 430) in a state where an SAR-related power back-off condition is not satisfied.

In operation 530, when the music playback function is in a deactivated state, the at least one processor 420 and 491 according to an embodiment may control the communication circuit 493 to transmit a communication signal using first transmission power control information. The first transmission power control information according to an embodiment may include information that causes the communication circuit 493 to use a specified transmission power level or MTPL (e.g., 23dBm in the 3GPP communication standards) for each frequency band. For example, the first transmission power control information may include transmission power control information (e.g., a normal transmission power control table (or a default transmission power control table)) for a normal state. The first transmission power control information according to an embodiment may include information such as Table 1 below.

**[Table 1]**

| INDEX | BAND | Power control |
|---|---|---|
| 1 | 2 | 0 |
| 2 | 4 | 0 |
| 3 | 5 | 0 |
| 4 | 12 | 0 |
| 5 | 13 | 0 |
| ... | ... | ... |

Referring to Table 1, BAND according to an embodiment may be frequency band identification information. According to an embodiment, BAND: 2 may be a band ranging from 1850 to 1910MHz. According to an embodiment, BAND: 4 may be a band ranging from about 1710 to 1755MHz. According to an embodiment, BAND: 5 may be a band ranging from about 824 to 849MHz. According to an embodiment, BAND: 12 may be a band ranging from about 699 to 716MHz. According to an embodiment, BAND: 13 may be a band ranging from about 777 to 787MHz. Power control according to an embodiment may be power control information for each frequency band. For example, BAND: 2, Power control: 0 may be information indicating that the power of the frequency band corresponding to 2 is not adjusted. BAND: 4, Power control: 0 may be information indicating that the power of the frequency band corresponding to 4 is not adjusted. The first transmission power control information according to an embodiment may be information that controls the specified transmission power level or MTPL (e.g., 23dBm in the 3GPP communication standards) for each frequency band or to be used without adjustment. In operation 540, when the music playback function is in an activated state, the at least one processor 420 and 491 according to an embodiment may control the communication circuit 493 to transmit the communication signal using second transmission power control information. The second transmission power control information according to an embodiment may include information that causes the specified transmission power level band (e.g., 23dBm in the 3GPP communication standards) for each frequency to be lowered by a specified value (e.g., a few dB or about -1dB). For example, the second transmission power control information may include a preset transmission power control table corresponding to music playback activation. The second transmission power control information according to an embodiment may include information that causes the specified transmission power level for each frequency band to be lowered by a specified value (e.g., a few dB or about -1dB) according to a music playback time.

The second transmission power control information according to an embodiment may include information such as Table 2 below.

**[Table 2]**

| INDEX | BAN D | Time(m) | Power control |
|---|---|---|---|
| 1 | 2 | 0 | 0 |
| | | 5 | -1 |
| | | 10 | -2 |
| | | 15 | -3 |
| 2 | 4 | 0 | 0 |
| | | 5 | -1 |
| | | 10 | -2 |
| | | 15 | -3 |
| 3 | 5 | 0 | 0 |
| | | 5 | -1 |
| | | 10 | -2 |
| | | 15 | -3 |
| 4 | 12 | 0 | 0 |
| | | 5 | -1 |
| | | 10 | -2 |
| | | 15 | -3 |
| 5 | 13 | 0 | 0 |
| | | 5 | -1 |
| | | 10 | -2 |
| | | 15 | -3 |
| ... | ... | ... | ... |

Referring to Table 2, BAND according to an embodiment may be frequency band identification information. Time(m) according to an embodiment may be a music playback time. Power control according to an embodiment may be power control information for each frequency band. For example, BAND: 2, Time(m): 0, Power control: 0 may be information indicating that the power of the frequency band corresponding to 2 is not adjusted, when the music playback time is 0 minutes. BAND: 2, Time(m): 5, Power control: -1 may be control information that causes the power of the frequency band corresponding to 2 to be lowered by - 1dB, when the music playback time is greater than 0 minutes and less than 5 minutes. BAND: 2, Time(m): 10, Power control: -2 may be control information that causes the power of the frequency band corresponding to 2 to be lowered by -2dB, when the music playback time is greater than 5 minutes and less than 10 minutes. BAND: 2, Time(m): 15, Power control: -3 may be control information that causes the power of the frequency band corresponding to 2 to be lowered by -3dB, when the music playback time is greater than 10 minutes and less than 15 minutes. According to an embodiment, when the music playback time exceeds 15 minutes, the power of the frequency band corresponding to 2 may be maintained lowered by 3dB or may be lowered by 3dB. Although a music playback time interval is exemplified as 5 minutes in Table 2, it may be set to a different interval between a few minutes and a few tens of minutes. In addition, although a power adjustment range is exemplified as -1dB in Table 2, it may be adjusted to a range smaller or larger than -1dB. In an embodiment, the power adjustment range is different depending on the music playback time. However, upon music playback activation, the power of a frequency band may be uniformly lowered by a constant value, regardless of the music playback time. A method for controlling transmission power in a wearable electronic device (the electronic device 101 in FIG. 1 or the wearable electronic device 401 in FIG. 4) may include identifying whether a music playback function is activated, based on occurrence of an event for transmitting a communication signal. The method according to an embodiment may include transmitting the communication signal using first transmission power control information through communication circuitry, based on deactivation of the music playback function. The method according to an embodiment may include transmitting the communication signal using second transmission power control information through the communication circuitry, based on activation of the music playback function. In the method according to an embodiment, the first transmission power control information may include information configured to cause the communication circuit to use a specified transmission power level for each frequency band. In the method according to an embodiment, the second transmission power control information may include information configured to cause the specified transmission power level for each frequency band to be lowered by a specified value corresponding to the activation of the music playback function.

In the method according to an embodiment, the specified value may be set to a different value according to a music playback time based on the activation of the music playback function.

The method according to an embodiment may include identifying whether an SAR-related power back-off condition is satisfied, based on the occurrence of the event for transmitting the communication signal. The method according to an embodiment may include, in case that the SAR-related power back-off condition is not satisfied, transmitting the communication signal through the communication circuitry, using the first transmission power control information or the second transmission power control information according to whether the music playback function is activated. The method according to an embodiment may include, in case that the SAR-related power back-off condition is satisfied, transmitting the communication signal based on third transmission power information.

In the method according to an embodiment, the SAR-related power back-off condition may include a condition that a microphone or a speaker is in use during a call connection, and a country code related to communication corresponding to the call connection is a specified MCC.

In the method according to an embodiment, the wearable electronic device may include an application processor and a communication processor. The method according to an embodiment may include identifying whether the music playback function is activated based on occurrence of an interrupt related to audio processing, transmitting a first value corresponding to the deactivation of the music playback function to the communication processor, in case that the music playback function is deactivated, and transmitting a second value corresponding to the activation of the music playback function to the communication processor, in case that the music playback function is activated, by the application processor. The method according to an embodiment may include, based on the reception of the first value, controlling the communication circuitry to transmit the communication signal through the communication circuitry based on the first transmission power information, and based on the reception of the second value, controlling the communication circuitry to transmit the communication signal through the communication circuitry based on the second transmission power information, by the communication processor.

In the method according to an embodiment, the application processor and the communication processor may communicate using an IPC protocol.

The method according to an embodiment may include identifying the activation of the music playback function by the application processor, based on a media session created by execution of a music data streaming application.

The method according to an embodiment may include converting a transmission baseband signal to a transmission RF signal and outputting the transmission RF signal through an RFIC, based on the occurrence of the event for transmitting the communication signal.

The method according to an embodiment may include amplifying power of the transmission RF signal and outputting the amplified transmission RF signal via an antenna module through an RFFE, based on the first transmission power control information, the second transmission power control information, or the third transmission power control information.

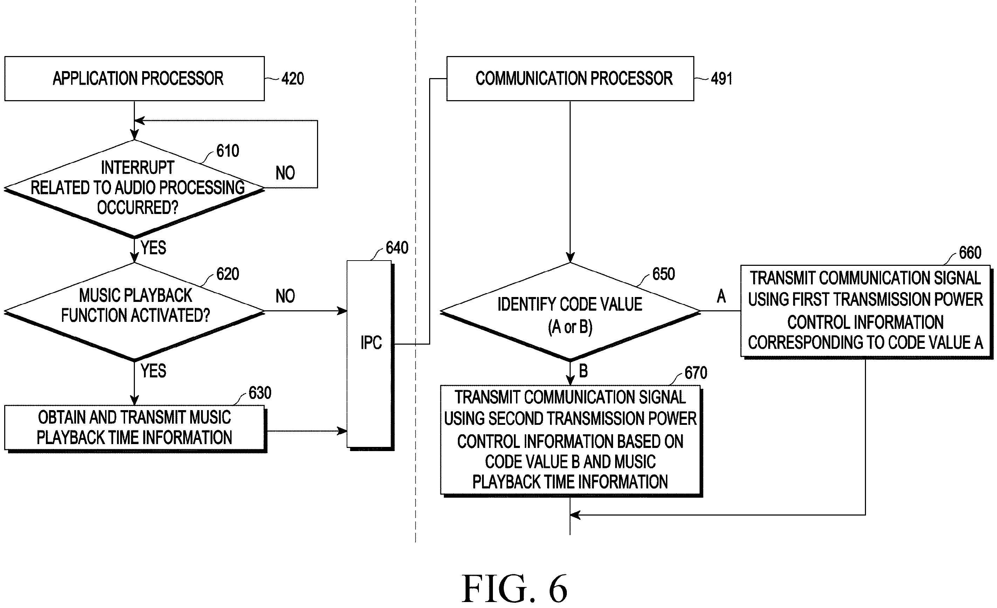

FIG. 6 is a procedural diagram illustrating an operation through communication between the application processor 420 and the communication processor 491 according to an embodiment.

Referring to FIG. 6, an application processor (e.g., the processor 120 in FIG. 1 or the application processor 420 in FIG. 4) of an electronic device (e.g., the electronic device 101 in FIG. 1 or the electronic device 401 in FIG. 4) according to an embodiment may perform at least one of operations 610 to 640, and a communication processor (e.g., the wireless communication module 192 in FIG. 1 or the communication processor 491 in FIG. 4) of the electronic device (e.g., the electronic device 101 in FIG. 1 or the electronic device 401 in FIG. 4) according to an embodiment may perform at least one of operations 650 to 670.

In operation 610, the application processor 420 according to an embodiment may identify occurrence of an interrupt related to audio processing. The application processor 420 according to an embodiment may identify occurrence of an interrupt related to audio processing (or the audio data block in the memory 430). The application processor 420 according to an embodiment may identify whether the music playback function is activated based on a media session created by execution of a music playback application or a music data streaming application. The application processor 420 according to an embodiment may also identify whether the music playback function is activated based on the occurrence of the interrupt related to audio processing (or the audio data block in the memory 430) in a state where an SAR-related power back-off condition is not satisfied.

In operation 620, the application processor 420 according to an embodiment may identify whether the music playback function is activated, based on the occurrence of the interrupt related to audio processing. The application processor 420 according to an embodiment may identify whether music playback is in an active state according to an audio configuration. When the music playback function is in a deactivated state, the application processor 420 according to an embodiment may proceed to operation 640.

In operation 630, when the music playback function is in an activated state, the application processor 420 according to an embodiment may obtain music playback time information and proceed to operation 640.

In operation 640, the application processor 420 according to an embodiment may transmit a first value (e.g., code value A(0x200010)) corresponding to the deactivation of the music playback function, or a second value (e.g., code value B(0x100000)) and the music playback time information corresponding to the activation of the music playback function to the communication processor 491 using an IPC protocol.

In operation 650, the communication processor 491 according to an embodiment may determine (or identify) the code value received from the application processor 420. The communication processor 491 according to an embodiment may determine (or identify) whether the code value received from the application processor 420 is A or B.

In operation 660, the communication processor 491 according to an embodiment may control the communication circuit 493 to transmit a communication signal using first transmission power control information (e.g., the first transmission power control information in Table 1) corresponding to code value A.

In operation 670, the communication processor 491 according to an embodiment may control the communication circuit 493 to transmit the communication signal using second transmission power control information (e.g., the second transmission power control information in Table 2) based on code value B and the music playback time information.

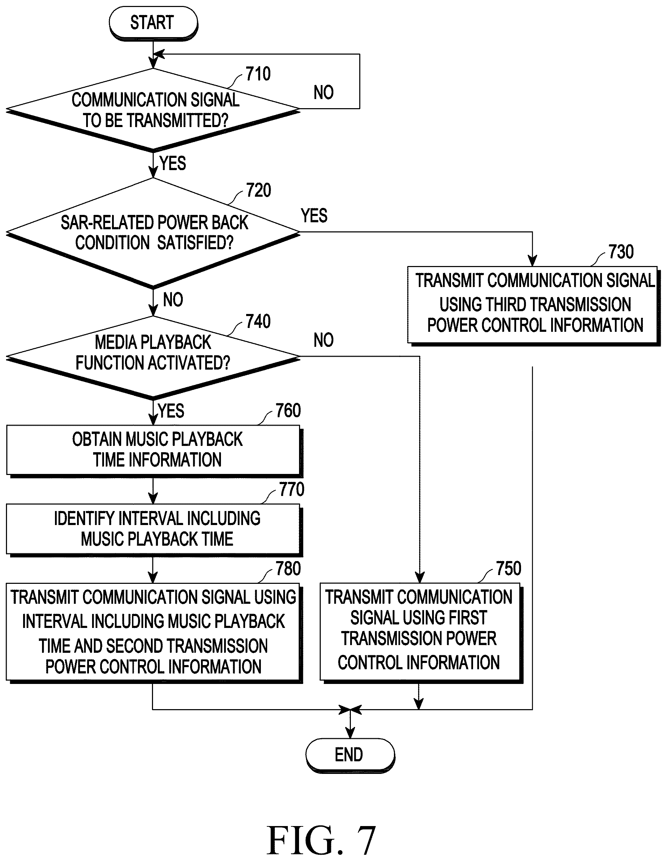

FIG. 7 is a flowchart illustrating a transmission power control operation considering an SAR-related power back-off condition in a wearable electronic device according to an embodiment.

Referring to FIG. 7, at least one processor (e.g., the processor 120 and the wireless communication module 192 in FIG. 1 or the application processor 420 and the communication processor 491 in FIG. 4) of an electronic device (e.g., the electronic device 101 in FIG. 1 or the electronic device 401 in FIG. 4) according to an embodiment may perform at least one of operations 710 to 780.

In operation 710, the at least one processor 420 and 491 according to an embodiment may identify occurrence of a communication signal transmission event. The at least one processor 420 and 491 according to an embodiment may identify whether there is a baseband signal to be transmitted.

In operation 720, the at least one processor 420 and 491 according to an embodiment may identify whether an SAR-related power back-off condition is satisfied. An SAR according to an embodiment is a numerical value that indicates how much electromagnetic wave radiated from the wearable electronic device 101 or 401 is absorbed by the human body. The SAR uses units of KW/g or mW/g, which may mean the amount of power (KW, W, or mW) absorbed per 1g of the human body. According to an embodiment, the SAR-related power back-off condition may be a condition that an expected SAR from the transmission power exceeds a threshold. For example, the SAR-related power back-off condition may include a condition that a microphone or speaker is in use during a call connection, and a country code related to the communication corresponding to the call connection is a specified MCC.

In operation 730, when the SAR-related power back-off condition is satisfied, the at least one processor 420 and 491 according to an embodiment may control the communication signal to be transmitted using third transmission power control information, regardless of whether the music playback function is activated. The third power control information according to an embodiment may include information for adjusting a specified maximum transmission power level for each frequency band to a level corresponding to the SAR-related power back-off condition.

The third transmission power control information according to an embodiment may include information such as Table 3 below.

**[Table 3]**

| INDEX | BAND | Power control |
|---|---|---|
| 1 | 2 | -4 |
| 2 | 4 | 0 |
| 3 | 5 | -5 |
| 4 | 12 | 0 |
| 5 | 13 | -4 |
| ... | ... | ... |

Referring to Table 3, BAND according to an embodiment may be frequency band identification information. Power control according to an embodiment may be power control information for each frequency band. For example, BAND: 2, Power control: -4 may be control information that causes the power of the frequency band corresponding to 2 to be lowered by - 4dB. BAND: 4, Power control: 0 may be information indicating that the power of the frequency band corresponding to 4 is not adjusted. BAND: 5, Power control: -5 may be control information that causes the power of the frequency band corresponding to 5 to be lowered by -5dB. BAND: 12, Power control: 0 may be information indicating that the power of the frequency band corresponding to 12 is not adjusted. BAND: 13, Power control: -4 may be control information that causes the power of the frequency band corresponding to 13 to be lowered by -4dB. Table 3 only describes one example for power adjustment, and it is obvious that the control information values may be set to various other values depending on experiments regarding the relationship between transmission power levels and SARs for each frequency band of the wearable electronic device 101 or 401. In operation 740, when the SAR-related power back-off condition is not satisfied, the at least one processor 420 and 491 according to an embodiment may identify whether the music playback function is activated. The at least one processor 420 and 491 according to an embodiment may identify whether the music playback function is activated, based on an interrupt related to audio processing (or the audio data block in the memory 430). The at least one processor 420 and 491 according to an embodiment may identify whether the music playback function is activated, based on a media session created by execution of a music playback application or a music data streaming application. The application processor 420 according to an embodiment may identify whether the music playback function is activated, based on an interrupt related to audio processing (or the audio data block in the memory 430) in a state where the SAR-related power back-off condition is not satisfied. In operation 750, when the music playback function is in a deactivated state,, the at least one processor 420 and 491 according to an embodiment may control the communication circuit 493 to transmit a communication signal using first transmission power control information. The first transmission power control information according to an embodiment may include information that causes the communication circuit 493 to use a specified transmission power level or MTPL (e.g., 23dBm in the 3GPP communication standards) for each frequency band. For example, the first transmission power control information may include transmission power control information (e.g., a normal transmission power control table (or a default transmission power control table)) for a normal state. The first transmission power control information according to an embodiment may include information such as the aforementioned Table 1.

In operation 760, when the music playback function is in an activated state, the at least one processor 420 and 491 according to an embodiment may obtain music playback time information. The at least one processor 420 and 491 according to an embodiment may continuously (or periodically) check a music playback time in the activated state of the music playback function and obtain an accumulated music playback time from a start time of music playback until a current time.

In operation 770, the at least one processor 420 and 491 according to an embodiment may identify an interval that includes the music playback time. In a state where music playback time intervals are set in units of a specified time unit (e.g., 5 minutes), the at least one processor 420 and 491 according to an embodiment may identify an interval that includes the music playback time. The music playback time unit (or interval) may be set to a different time unit between a few minutes and a few tens of minutes.

In operation 780, the at least one processor 420 and 491 according to an embodiment may control the communication circuit 493 to transmit the communication signal using the interval that includes the music playback time and second transmission power control information (e.g., the second transmission power control information in Table 2).

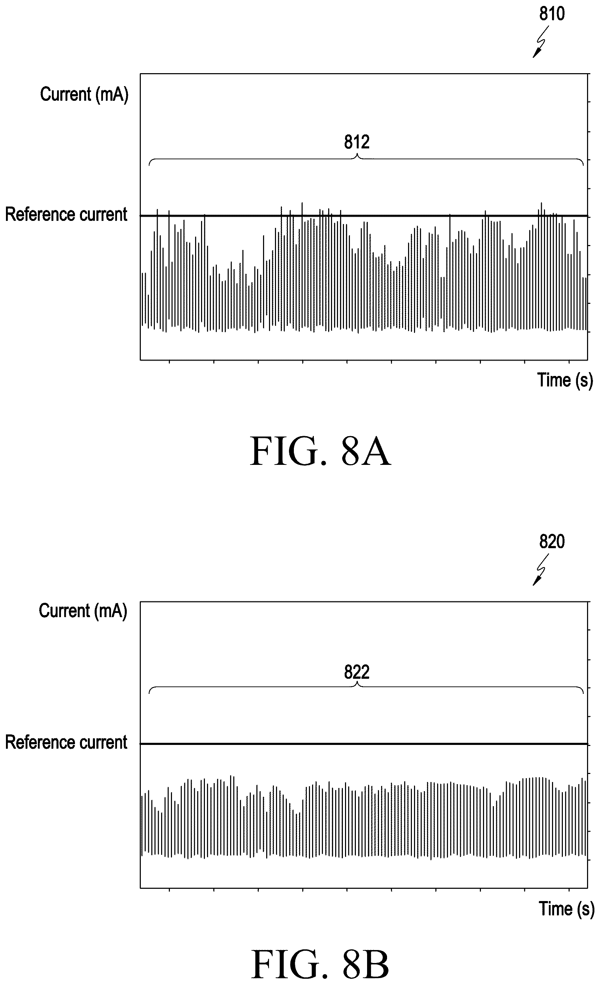

FIG. 8A is a graph illustrating peak currents, when the second transmission power control information according to the activation of the music playback function is not applied in a wearable electronic device according to an embodiment. FIG. 8B is a graph illustrating peak currents, when the second transmission power control information according to the activation of the music playback function is applied in a wearable electronic device according to an embodiment.

Referring to FIG. 8A, in a first peak current graph 810 according to an embodiment, the horizontal axis may represent time s and the vertical axis may represent current mA. When the music playback function is activated with the SAR-related power back-off condition not satisfied, and at least one processor (e.g., the processor 120 and the wireless communication module 192 in FIG. 1 or the application processor 420 and the communication processor 491 in FIG. 4) of a wearable electronic device (e.g., the electronic device 101 in FIG. 1 or the wearable electronic device 401 in FIG. 4) performs a transmission operation using the first transmission power control information for the normal state during music playback, current peaks 812 higher than a reference current may occur, as illustrated in the first peak current graph 810, which may increase heat temperature and thus cause frequent occurrences of a cooling-down mode due to heat generation.

Referring to FIG. 8B, in a second peak current graph 820 according to an embodiment, the horizontal axis may represent time s and the vertical axis may represent current mA. When the music playback function is activated with the SAR-related power back-off condition not satisfied, and at least one processor (e.g., the processor 120 and the wireless communication module 192 in FIG. 1 or the application processor 420 and the communication processor 491 in FIG. 4) of a wearable electronic device (e.g., the electronic device 101 in FIG. 1 or the wearable electronic device 401 in FIG. 4) performs a transmission operation using using the second transmission power control information during music playback, second current peaks 814 that are lower than the first current peaks 812 or the reference current may occur, as illustrated in the second peak current graph 820, which may lower the heat temperature and reduce the number of times the cooling-down mode occurs caused by heat generation, compared to the state of the first peak current graph 810.

When the music playback function is activated with the SAR-related power back-off condition not satisfied, and a wearable electronic device (e.g., the electronic device 101 in FIG. 1 or the wearable electronic device 401 in FIG. 4) uses the second transmission power control information during music playback, a call maintenance time (e.g., a call maintenance time related to music streaming) may be increased, compared to when it does not use the second transmission power control information.

Table 4 below illustrates average currents, call maintenance times, and temperatures (e.g., rear temperatures) of the wearable electronic device during cool-down, when the wearable electronic device 401 does not use the second transmission power control information and when it uses the second transmission power control information, during music streaming under a weak network field condition.

**[Table 4]**

| Weak network field condition | Without second transmission power control information | First case of using second transmission power control information | Second case of using second transmission power control information |
|---|---|---|---|
| Average current during call maintenance | 211mA | 216mA | 220mA |
| Call maintenance time | 4'13" | 5'10"(approximately 20%↑) | 5'29"(approximately 30%↑) |
| Temperature during cool-down (°C) | 39.5 | 39.9 | 39.7 |

Referring to Table 4, in the case where music streaming is performed and thus the music playback function is activated in a state that the SAR-related power back-off condition is not satisfied, compared to when the second transmission power control information is not used, a wearable electronic device (e.g., the electronic device 101 in FIG. 1 or the wearable electronic device 401 in FIG. 4) according to an embodiment may increase the call maintenance time (e.g., the call maintenance time related to music streaming), thus extending a network connection usage time, and delay the entry into the cool-down mode during music playback, while maintaining a similar average current and temperature during cool-down, in the first or second case of using the second transmission power control information during music playback. The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, in a non-transitory storage medium storing instructions, the instructions may be configured to, when executed by an electronic device, cause the electronic device to perform at least one operation. The at least one operation may include identifying whether a music playback function is activated, based on occurrence of an event for transmitting a communication signal, transmitting the communication signal using first transmission power control information through a communication circuitry, based on deactivation of the music playback function, and transmitting the communication signal using second transmission power control information through the communication circuitry, based on activation of the music playback function.

According to an embodiment, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101 in FIG. 1 or 401 in FIG. 4) comprising:
a sound output module (155 in FIG. 1 or 455 in FIG. 4);
communication circuitry (493 in FIG. 4);
memory (130 in FIG. 1 or 430 in FIG. 4) storing instructions; and
at least one processor (420 and 491 in FIG. 4),
wherein the instructions, when executed by the at least one processor, cause the electronic device to:
identify whether a music playback function is activated, based on occurrence of an event for transmitting a communication signal,
transmit the communication signal using first transmission power control information by the communication circuitry, based on deactivation of the music playback function, and
transmit the communication signal using second transmission power control information by the communication circuitry, based on activation of the music playback function.

2. The wearable electronic device of claim 1, wherein the first transmission power control information includes information configured to cause the communication circuitry to use a specified transmission power level for each frequency band, and
wherein the second transmission power control information includes information configured to cause the specified transmission power level for each frequency band to be lowered by a specified value corresponding to the activation of the music playback function.

3. The wearable electronic device of claim 1 or 2, wherein the specified value is -1dB.

4. The wearable electronic device of claim 1 or 2, wherein the specified value is set to a different value according to a music playback time based on the activation of the music playback function.

5. The wearable electronic device of any one of claims 1 to 4, wherein the instructions, when executed by the at least one processor, cause the electronic device to:
further identify whether a specific absorption rate (SAR)-related power back-off condition is satisfied, based on the occurrence of the event for transmitting the communication signal,
when the SAR-related power back-off condition is not satisfied, transmit the communication signal by the communication circuit, using the first transmission power control information or the second transmission power control information according to whether the music playback function is activated, and
when the SAR-related power back-off condition is satisfied, transmit the communication signal based on third transmission power information.

6. The wearable electronic device of any one of claims 1 to 5, wherein the SAR-related power back-off condition includes a condition that a microphone or a speaker is in use during a call connection, and a country code related to communication corresponding to the call connection is a specified mobile country code (MCC).

7. The wearable electronic device of any one of claims 1 to 6, wherein the at least one processor includes an application processor and a communication processor, and
wherein the instructions, when executed by the application processor, cause the electronic device to:
identify whether the music playback function is activated based on occurrence of an interrupt related to audio processing,
in case that the music playback function is deactivated, transmit a first value corresponding to the deactivation of the music playback function to the communication processor, and
in case that the music playback function is activated, transmit a second value corresponding to the activation of the music playback function to the communication processor, and
wherein the instructions, when executed by the communication processor, cause the electronic device to:
based on the reception of the first value, transmit the communication signal through the communication circuit based on the first transmission power information, and
based on the reception of the second value, transmit the communication signal through the communication circuitry based on the second transmission power information.

8. The wearable electronic device of any one of claims 1 to 7, wherein the application processor and the communication processor are configured to communicate using an interprocessor communication (IPC) protocol.

9. The wearable electronic device of any one of claims 1 to 8, wherein the instructions, when executed by the application processor, cause the electronic device to identify the activation of the music playback function, based on a media session created by execution of a music data streaming application.

10. The wearable electronic device of any one of claims 1 to 9, wherein the communication circuitry includes an RFIC and an RFFE,
wherein the RFIC is configured to convert a transmission baseband signal to a transmission RF signal and output the transmission RF signal,
wherein the RFFE is configured to amplify power of the transmission RF signal and output the amplified transmission RF signal through an antenna module, and
wherein the instructions, when executed by the communication processor, cause the electronic device to control an operation of a power amplifier of the RFFE for amplifying the transmission RF signal generated by the RFIC, based on the first transmission power control information, the second transmission power control information, or the third transmission power control information.

11. A method for controlling transmission power in a wearable electronic device (101 in FIG. 1 or 401 in FIG. 4), the method comprising:
identifying whether a music playback function is activated, based on occurrence of an event for transmitting a communication signal;
transmitting the communication signal using first transmission power control information through communication circuitry, based on deactivation of the music playback function; and
transmitting the communication signal using second transmission power control information through the communication circuitry, based on activation of the music playback function.

12. The method of claim 11, wherein the first transmission power control information includes information configured to cause the communication circuitry to use a specified transmission power for each frequency band,
wherein the second transmission power control information includes information configured to cause the specified transmission power level for each frequency band to be lowered by a specified value corresponding to the activation of the music playback function, and
wherein the specified value is set to a different value according to a music playback time based on the activation of the music playback function.

13. The method of claim 11 or 12, further comprising:
identifying whether a specific absorption rate (SAR)-related power back-off condition is satisfied, based on the occurrence of the event for transmitting the communication signal;
in case that the SAR-related power back-off condition is not satisfied, transmitting the communication signal through the communication circuitry, using the first transmission power control information or the second transmission power control information according to whether the music playback function is activated; and
in case that the SAR-related power back-off condition is satisfied, transmitting the communication signal based on third transmission power information,
wherein the SAR-related power back-off condition includes a condition that a microphone or a speaker is in use during a call connection, and a country code related to communication corresponding to the call connection is a specified mobile country code (MCC).

14. The method of any one of claims 11 to 13, wherein the wearable electronic device includes an application processor and a communication processor, and
wherein the method comprises:
identifying whether the music playback function is activated based on occurrence of an interrupt related to audio processing, transmitting a first value corresponding to the deactivation of the music playback function to the communication processor, in case that the music playback function is deactivated, and transmitting a second value corresponding to the activation of the music playback function to the communication processor, in case that the music playback function is activated, by the application processor; and
based on the reception of the first value, controlling the communication circuitry to transmit the communication signal through the communication circuitry based on the first transmission power information, and based on the reception of the second value, controlling the communication circuitry to transmit the communication signal through the communication circuitry based on the second transmission power information, by the communication processor.

15. A non-transitory storage medium storing instructions configured to, when executed by an electronic device, cause the electronic device to perform at least one operation,
wherein the at least one operation includes:
identifying whether a music playback function is activated, based on occurrence of an event for transmitting a communication signal;
transmitting the communication signal using first transmission power control information through communication circuitry, based on deactivation of the music playback function; and
transmitting the communication signal using second transmission power control information through the communication circuitry, based on activation of the music playback function.
